(19) Europäisches Patentamt / European Patent Office / Office européen des brevets

(11) **EP 4 195 709 A1**

(12) **DEMANDE DE BREVET EUROPEEN**

(43) Date de publication:
**14.06.2023 Bulletin 2023/24**

(21) Numéro de dépôt: **22211238.5**

(22) Date de dépôt: **02.12.2022**

(51) Classification Internationale des Brevets (IPC):
**H04W 4/029** (2018.01)   **G01C 21/34** (2006.01)
**G06F 16/29** (2019.01)   **G06Q 10/02** (2012.01)

(52) Classification Coopérative des Brevets (CPC):
**H04W 4/029; G01C 21/3423**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **09.12.2021 FR 2113219**

(71) Demandeur: **IFP Energies nouvelles**
**92500 Rueil-Malmaison (FR)**

(72) Inventeurs:
• **COLLET, David**
  **92852 RUEIL-MALMAISON CEDEX (FR)**
• **DE NUNZIO, Giovanni**
  **92852 RUEIL-MALMAISON (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCEDE DE DETERMINATION D'UN MODE DE TRANSPORT D'UN TRAJET PARCOURU PAR UN UTILISATEUR**

(57)   L'invention concerne un procédé de détermination d'un mode de transport (MDP) d'un trajet (traj) au moyen d'un réseau (Res) de téléphonie, et de graphes de transport (G_MDP) pour chaque mode de transport dans lequel on réalise les étapes suivantes :
a) on acquiert (Acq) des données spatiales et temporelles (DSP) de connexion d'un téléphone (Tel) au réseau (Res) et on détermine (For) un trajet (traj) par des emplacements-instants définis des positions d'antennes du réseau connectées au téléphone;
b) Pour chaque graphe de transport (G_MDP), on détermine (Det) des nœuds identifiés (NIS) à partir des couples emplacements-instants;
c) Puis, on détermine (Opt), par des optimisations de plus court chemin, des chemins possibles (CP) ;
d) on détermine (Corr) un indice de corrélation (Ind) entre chaque chemin (CP) et le trajet (traj) et
e) on détermine (Det_MDP) le mode de transport (MDP) par optimisation de l'indice de corrélation (Ind).

[Fig 1]

## Description

### Domaine technique

La présente invention concerne le domaine de la détermination d'un mode de transport d'un trajet parcouru par un utilisateur.

Le domaine du transport revêt un aspect essentiel de la vie quotidienne dont l'économie mondiale dépend fortement. Cependant, il joue également un rôle majeur dans la dégradation de la qualité de l'air et dans l'augmentation des émissions de $CO_2$, en particulier dans les zones urbaines. Selon l'Organisation Mondiale de la Santé (OMS), le transport est l'une des principales sources de pollution atmosphérique, et il est directement lié à de multiples maladies respiratoires et cardiovasculaires. En outre, le transport mondial est à l'origine d'environ 24 % des émissions directes de $CO_2$ provenant de la combustion de carburants, dont près des trois quarts correspondent aux voitures, camions, bus et motos, ce qui aggrave encore le phénomène de réchauffement climatique. Parmi les autres types d'émissions nocives, figurent les oxydes d'azote (NOx), l'ozone troposphérique ($O_3$) et les particules (PM), qui dépassent généralement les limites recommandées. L'importance du rôle des transports dans la qualité de l'air se reflète également dans le nombre croissant d'actions politiques menées en Europe au cours des dernières années, ce qui en fait un sujet central. Les stratégies visant à s'attaquer à ce problème sont notamment les suivantes : normes en matière d'efficacité des véhicules et des carburants à faible teneur en carbone, développement et incitations de véhicules à faibles émissions, politiques fiscales et régimes d'imposition, développement des infrastructures routières et des transports en commun.

Néanmoins, le choix des utilisateurs vis-à-vis des différents modes de transport possible et la répartition de ces choix des différents utilisateurs dans une zone géographique donnée sont aujourd'hui mal connus alors qu'ils sont essentiels pour l'aménagement de réseaux de transports routiers, de transport en commun ou de mobilité douce (vélo et trottinettes notamment). A ce jour, les pouvoirs publics disposent d'outils d'analyse permettant de mesurer les choix de mobilité et l'impact potentiel des travaux d'aménagement (routier, transports en commun, mobilité douce) essentiellement fondés sur des approches de modélisation de la mobilité. Cependant, ces modèles sont très difficiles à mettre en place (besoin de données d'enquête de population très coûteuses, besoin d'un effort conséquent de calibration), à maintenir (la maintenance est déléguée aux bureaux d'études, il est donc difficile de faire évoluer l'outil rapidement), à mettre à jour (les enquêtes de population sont menées tous les 5 à 10 ans).

Il existe donc un besoin de caractériser les évolutions rapides de la mobilité en déterminant les modes de transport des utilisateurs en fonction de leurs trajets, à partir de données réelles de mobilité.

D'autre part, le développement technologique des appareils portables et de la communication sans fil s'est accéléré ces dernières années, notamment avec les téléphones. Il est ainsi possible d'extraire divers types d'informations concernant les déplacements des utilisateurs dans le monde entier. Toutefois, il est difficile d'identifier le mode de transport utilisé de manière fiable à partir de mesures effectuées à partir de ces téléphones intelligents.

L'invention a également pour objet la détermination des émissions polluantes d'un trajet en fonction du mode de transport ainsi que la détermination d'un débit de véhicules sur des routes ou d'usagers dans un réseau de transport en communs.

L'invention a également pour but de limiter la mémoire et la puissance de calcul nécessaire pour la mise en oeuvre du procédé par ordinateur.

L'invention a ainsi pour objet l'analyse de la mobilité des personnes, et plus précisément de leur choix de mode de transport pour leurs déplacements, afin de constater les impacts de la mobilité sur les émissions de polluant et la qualité de l'air.

Un autre objet de l'invention consiste à suivre l'évolution des choix de mode de transport des personnes lors de leurs déplacements au cours du temps de manière à évaluer les stratégies mises en place par les pouvoirs publics (aménagements routiers, transport en commun, mobilité douce). L'invention peut, pour se faire, servir à déterminer les choix de modes de transport des utilisateurs d'une zone géographique plus régulièrement (par ex. tous les mois), sans devoir attendre de nouvelles enquêtes statistiques (enquêtes ménages-déplacements menées tous les 5 à 10 ans).

### Technique antérieure

Le téléphone mobile est devenu l'un des objets incontournables pour un grand nombre de personnes. Les téléphones mobiles d'aujourd'hui peuvent, outre le fait d'être connectés au réseau de téléphonie mobile, être connectés et/ou détectés par d'autres appareils, tels que des satellites via le protocole Global Positioning System (GPS), des bornes de réseau sans fil via le protocole WIFI ou d'autres téléphones mobiles via le protocole Bluetooth.

En général, les méthodes qui tentent de déterminer le mode de transport d'un trajet sont basées sur des données GPS, éventuellement complétées par des données issues de l'accéléromètre du téléphone, du magnétomètre, du gyroscope, et/ou baromètre.

Dans la publication « CT-Mapper : Mapping sparse multimodal cellular trajectories using a multilayer transportation network » -Asgari and al. - 27 Avril 2016, un graphe représentatif de plusieurs modes de transport, dit « multimodal », est utilisé pour déterminer la trajectoire la plus probable à partir d'un modèle de Markov. Pour chaque noeud du réseau, une probabilité que l'utilisateur soit à un endroit et à un instant donné est considérée. Par ailleurs, le modèle utilise des probabilités de transition entre les noeuds venant d'informations issues du réseau de transport, de manière à retrouver le chemin le plus probable.

L'utilisation de probabilités ne permet pas de bien prendre en compte les arrêts courts que peut faire l'utilisateur sur son trajet.

On connait également la publication "TRANSIT : Fine-grained human mobility trajectory inference at scale with mobile network signaling data" - Bonnetain and al. - Juillet 2021 qui concerne une méthode de détermination de trajectoires à partir de données de connexion d'un téléphone mobile à un réseau de téléphonie mobile. Néanmoins, cette méthode ne cherche pas à faire coïncider les trajectoires avec des portions des réseaux de transport sur un graphe représentatif.

L'invention consiste ainsi à proposer une méthode de détermination d'un mode de transport permettant notamment de mieux prendre en compte les arrêts de courte durée sur le trajet, en étant robuste vis-à-vis de ces arrêts. Cette méthode peut alors être utilisée pour constater les choix des modes de transport d'une population au sein d'un réseau de transport à partir des données de téléphonie enregistrées par les opérateurs téléphoniques, et évaluer l'évolution de ces choix au cours du temps et notamment en fonction des stratégies mises en place (modification des infrastructures routières, de mobilité douce et de transport en commun par exemple).

## Résumé de l'invention

L'invention concerne un procédé de détermination d'un mode de transport d'un trajet parcouru par au moins un utilisateur, au moyen d'un réseau de téléphonie mobile, du téléphone mobile de l'utilisateur apte à se connecter à des antennes dudit réseau de téléphonie mobile et au moyen de graphes de transport pour chaque mode de transport ou combinaison de mode de transport, chaque graphe de transport comprenant des noeuds, des portions de routes reliant les différents noeuds et les vitesses moyennes de déplacement sur chaque portion de route, chaque portion de route du graphe de transport représentant les routes possibles (ou voies possibles telles que les lignes de transport en commun, les voies cyclables ou pédestres, les routes du réseau routier) par le mode de transport associé, dans lequel on met en oeuvre au moins les étapes suivantes :

a) on acquiert des données spatiales et temporelles de connexion du téléphone au réseau de téléphone mobile, les données spatiales et temporelles comprenant les positions des antennes auxquels le téléphone s'est connecté et les instants de début et de fin auxquels ont lieu ces connexions du téléphone aux antennes, on détermine une succession de couples emplacements-instants définis par des emplacements correspondant à certaines desdites positions des antennes issues des données spatiales et temporelles acquises et par les instants acquis de début et/ou de fin correspondant à ces emplacements, et on forme au moins une sous-route reliant deux couples emplacements-instants successifs dudit trajet, une succession des sous-routes déterminant le trajet parcouru ;
b) Pour chaque graphe de transport, on détermine les positions successives du téléphone de l'utilisateur sur des noeuds identifiés successifs du graphe de transport à partir des couples emplacements-instants, les noeuds identifiés successifs étant positionnés le plus près possible de chaque emplacement ;
c) Puis pour chaque graphe de transport et pour chaque sous-route, on détermine, par des optimisations de plus court chemin, un nombre prédéterminé de chemins possibles permettant de relier les différents noeuds identifiés successifs par des portions de route, chaque chemin possible comprenant les noeuds de passage reliant toutes les portions de route du chemin possible, et on calcule l'instant de passage de chaque noeud de passage à partir des vitesses moyennes associées à chaque portion de route, chaque chemin possible étant déterminé par la liste de tous les couples noeuds de passage - instants de passages dudit chemin possible ;
d) on détermine un indice de corrélation entre chacun des chemins possibles déterminés et le trajet parcouru déterminé, l'indice de corrélation étant représentatif de la proximité spatiale et/ou de la proximité temporelle de chaque noeud identifié successif avec les emplacements du trajet ; et
e) on détermine le mode de transport de chaque sous-route du trajet, par détermination du mode de transport qui optimise l'indice de corrélation pour la sous-route du trajet.

De préférence, les données spatiales et temporelles comprennent, de préférence exclusivement, des données d'enregistrement de transactions téléphoniques constituées d'un identifiant du téléphone de l'utilisateur sur le réseau, du type d'évènements de connexion du téléphone au réseau, un instant de début et un instant de chaque événement de connexion du téléphone au réseau de téléphonie mobile et la position de l'antenne du réseau de téléphonie mobile à laquelle s'est connecté le téléphone.

Avantageusement, on extrait un sous-graphe de chaque graphe de transport, le sous-graphe étant une partie du graphe de transport limité à une largeur prédéterminée autour de chaque sous-route déterminée à l'étape a) et on utilise le sous-graphe au lieu du graphe de transport pour chacune des étapes b) à e).

Selon un mode de réalisation de l'invention, on identifie des phases statiques de l'utilisateur à partir des données spatiales et temporelles et on détermine des phases de mobilité comme étant l'ensemble des phases qui ne sont pas des phases statiques, et à chaque phase de mobilité on détermine un trajet selon l'étape a), et de préférence, une phase statique étant identifiée par le fait que pendant une durée prédéterminée, les positions des antennes qui ont été connectées au téléphone sont situées dans un espace restreint autour d'une antenne prédéfinie parmi ces antennes, l'espace restreint étant de préférence déterminé par l'ensemble des antennes voisines de l'antenne prédéfinie à un ordre prédéfini,.

Selon une configuration de l'invention, à l'étape a), on forme le trajet depuis un point de départ à un instant de départ vers un point d'arrivée à un instant d'arrivée en passant de préférence par des points-étapes définis par des emplacements des couples emplacements-instants à des instants-étapes entre l'instant de départ et l'instant d'arrivée, les points de départ et d'arrivée correspondant aux emplacements des couples emplacements-positions, respectivement à l'instant de départ et à l'instant d'arrivée, l'instant de départ correspondant à l'instant de fin de la connexion de l'antenne au point de départ et l'instant d'arrivée correspondant à l'instant de début de la connexion de l'antenne au point d'arrivée.

De manière avantageuse, on détermine successivement les points-étapes :

- en calculant la distance entre l'emplacement du point-étape précédent, le premier point-étape correspondant au point de départ, et à l'instant correspondant à cet emplacement et chaque position d'antenne des données spatiales et temporelles à laquelle le téléphone s'est connecté après l'instant du point-étape précédent, et

- en calculant l'accroissement de cette distance au cours du temps, le point-étape étant déterminé à la première position d'antenne au cours du temps pour laquelle l'accroissement de la distance est inférieur à un seuil prédéfini.

Selon une mise en oeuvre de l'invention, à l'étape b), on identifie les noeuds successifs de la manière suivante :

i) on identifie le noeud de départ le plus proche possible de l'emplacement du couple emplacement-instant du premier instant du trajet ;

ii) puis pour chaque couple emplacement-instant suivant, on identifie le noeud le plus proche de l'emplacement de ce couple emplacement-instant qui soit relié par des portions de route au noeud identifié du couple emplacement-instant précédent et s'il n'y a pas de solution possible :

a1) on réitère l'étape ii) pour le couple emplacement-instant précédent pour identifier le noeud suivant le plus proche ;
a2) si l'étape a1) ne permet pas de trouver une solution, on revient à l'étape i) où on identifie le noeud suivant le plus proche l'emplacement du couple emplacement-instant du premier instant du trajet

Préférentiellement, à l'étape c), on détermine le nombre prédéterminé de chemins possibles par une optimisation au plus court chemin de manière séquentielle et en affectant un coefficient de pénalité à la vitesse des portions de route utilisées par les chemins possibles issue d'une optimisation au plus court chemin précédente.

De manière préférée, à l'étape d), on détermine l'indice de corrélation à partir de la composante de similarité spatiale $J_{spat}$ suivante :

$$J_{spat}(X, \widehat{X}) = \sum_{i=1}^{N_{sample}} \widetilde{d}(X(t_i), \widehat{X}, t_i)$$

$$\widetilde{d}(X(t_i), \widehat{X}, t_i) = \min_{t_j \leq t_i} d\left(X(t_i), \widehat{X}(t_j)\right)$$

Où $X(t_i)$) correspond aux emplacements des couples emplacements-instants à chaque instant ti et où $\widehat{X}(t_j)$ correspond aux noeuds de passage du chemin possible à chaque instant tj, la fonction d mesurant la distance entre $X(t_i)$) et $\widehat{X}(t_j)$ et $N_{sample}$ correspondant aux nombres de noeuds de passage.

Avantageusement, à l'étape d), on détermine l'indice de corrélation à partir de la composante de similarité de mouvement $J_{mouv}$ suivante :

$$J_{mouv}(x) = (\log(x+1) - \log(2))^2 + \left(\log\left(\frac{1}{x}+1\right) - \log(2)\right)^2$$

Où

$$x = F_{med}\left(\frac{d\hat{t}}{dt}(X,\hat{X})\right)$$

et

$$\hat{t}(t_i) = \arg\min_{t_j} d\left(X(t_i), \hat{X}(t_j)\right)$$

Où $X(t_i)$) correspond aux emplacements des couples emplacements-instants à chaque instant ti et où $\hat{X}(t_j)$ correspond aux noeuds de passage du chemin possible à chaque instant tj, la fonction d mesurant la distance entre $X(t_i)$) et $\hat{X}(t_j)$ et $F_{med}$ étant la fonction de filtre médian.

Selon une variante de l'invention, l'indice de corrélation est déterminé par la formule suivante :

$$J_{prox}(X,\hat{X}) = \lambda \cdot J_{spat}(X,\hat{X}) + (1-\lambda) \cdot J_{mouv}(X,\hat{X})$$

Où $\lambda$ est compris entre 0 et 1.

De préférence, à l'étape e), on détermine un score S par la formule suivante :

$$S = \frac{\tanh\hat{J} + 1}{2}$$

Avec

$$\hat{J} = \frac{J_{prox} - \mathbb{E}(J_{prox})}{std(J_{prox})}$$

Où $\mathbb{E}(J_{prox})$ et $std(J_{prox})$ sont respectivement l'espérance et l'écart-type de $J_{prox}$ et on détermine le mode de transport maximise le score S.

Selon une mise en oeuvre de l'invention, on prétraite les données spatiales et temporelles acquises pour ne retenir que les données correspondant à celles du téléphone de l'utilisateur.

L'invention concerne aussi un produit programme d'ordinateur téléchargeable depuis un réseau de communication et/ou enregistré sur un support lisible par ordinateur et/ou exécutable par un processeur ou un serveur, comprenant des instructions de code de programme pour la mise en oeuvre du procédé tel que décrit précédemment, lorsque ledit programme est exécuté sur un ordinateur ou un téléphone portable.

**Liste des figures**

D'autres caractéristiques et avantages du procédé et/ou du produit selon l'invention, apparaîtront à la lecture de la description ci-après d'exemples non limitatifs de réalisations, en se référant aux figures annexées et décrites ci-après.

La figure 1 représente un schéma-bloc représentatif d'un premier mode de réalisation du procédé de détermination d'un mode de transport selon l'invention.

La figure 2 représente un schéma-bloc représentatif d'un deuxième mode de réalisation du procédé de détermination d'un mode de transport selon l'invention.

La figure 3 représente un diagramme de Voronoi utilisé pour identifier les antennes voisines autour de l'antenne à laquelle le téléphone s'est connecté selon l'invention.

La figure 4 représente la détermination d'un point étape et de plusieurs chemins possibles selon l'invention.

La figure 5 représente la détermination d'un point étape selon l'invention, à partir d'une multitude de couples emplacements-instants correspondant aux positions des antennes auxquelles le téléphone s'est connecté associés aux instants de ces connexions.

La figure 6 représente la création d'un sous-graphe à partir d'un graphe de transport selon l'invention, ainsi que l'étape d'identification des noeuds du graphe ou du sous-graphe de transport, correspondant aux emplacements d'antennes selon l'invention.

La figure 7 représente une composante de similarité de mouvement en fonction de l'abscisse x selon l'invention.

La figure 8 représente le trajet parcouru par l'utilisateur selon un exemple de l'invention.

La figure 9 représente la détermination d'un point-étape sur le trajet parcouru par l'utilisateur de l'exemple de l'invention.

La figure 10 représente le découpage en cellules de Voronoi autour des antennes du réseau de téléphonie mobile autour du trajet parcouru de l'exemple de l'invention.

La figure 11 représente la comparaison des différents chemins parcourus par le procédé selon l'invention dans l'exemple et par un procédé de l'art antérieur.

**Description des modes de réalisation**

L'invention concerne un procédé de détermination d'un mode de transport d'un trajet parcouru par au moins un utilisateur, au moyen d'un réseau de téléphonie mobile, du téléphone mobile de l'utilisateur apte à se connecter à des antennes dudit réseau de téléphonie mobile et au moyen de graphes de transport pour chaque mode de transport ou combinaison de mode de transport. En d'autres termes, le procédé selon l'invention peut mettre en oeuvre : un graphe routier pour les déplacements en voiture, un graphe de transport pour les déplacements en bicyclette, un graphe de transport pour les déplacements en trottinette, un graphe de transport pour les déplacements pédestres, un graphe de transport pour les déplacements en transport en commun (bus, tram, métro, etc.), etc. Chaque graphe de transport comprenant des noeuds, des portions de routes reliant les différents noeuds et les vitesses moyennes de déplacement sur chaque portion de route, les noeuds représentant les intersections possibles entre les différentes voies possibles par le mode de transport associé et les portions de route correspondent aux voies possibles par ce mode de transport.
Les graphes de transport qui concernent les transports en commun (train, bus, tramway, métro, RER par exemple) peuvent avantageusement être des graphes en deux-dimensions pour tenir compte des horaires de passage de ces différents transports en commun. Les graphes en deux-dimensions tiennent compte à la fois de la dimension spatiale et à la fois de la dimension temporelle (jour et heure). Ainsi, pour le choix ultérieur du chemin possible, le procédé tient compte des horaires de passage des transports en commun. En effet, si un train part à 14H et le prochain à 16H pour faire un trajet Lyon (Part-Dieu) - Grenoble, un usager qui arrivera à la Gare de Lyon Part-Dieu à 14H05 devra attendre 1H55 pour prendre le train à 16H. En revanche, un usager qui arrivera à 13h50 n'attendra que 10 minutes et pourra prendre le train de 14H. Ainsi, le procédé est apte à prendre en compte les horaires de passage pour déterminer le trajet réalisé et le mode de transport utilisé.
Dans ce procédé, on met en oeuvre au moins les étapes suivantes :

a) on acquiert (ou on mesure ou on enregistre) des données spatiales et temporelles de connexion du téléphone au réseau de téléphone mobile par le réseau de téléphonie mobile, ces données spatiales et temporelles étant constituées par des événements enregistrés par le réseau de téléphonie mobile (par les opérateurs de téléphonie mobile) détectant une connexion entre le téléphone et le réseau de téléphonie mobile (à une antenne de ce réseau). Les données spatiales et temporelles comprennent les positions des antennes auxquelles le téléphone s'est connecté et les instants de début et de fin auxquels ont lieu ces connexions du téléphone aux antennes,

puis on détermine une succession de couples emplacements-instants définis par des emplacements correspondant à certaines desdites positions des antennes issues des données spatiales et temporelles mesurées et par les instants mesurés de début et/ou de fin correspondant à ces emplacements, et on forme au moins une sous-route reliant deux couples emplacements-instants successifs dudit trajet, une succession des sous-routes déterminant le trajet parcouru ;

b) Pour chaque graphe de transport, on détermine les positions successives du téléphone de l'utilisateur sur des noeuds identifiés successifs du graphe de transport à partir des couples emplacements-instants, les noeuds identifiés successifs étant positionnés le plus près possible de chaque emplacement; tout en étant reliés entre eux par des portions de route du graphe de transport, c'est-à-dire qu'il existe au moins un chemin composé d'une ou plusieurs portions de route permettant de rejoindre deux noeuds identifiés successifs du graphe de transport, afin de permettre une solution à l'optimisation de plus court chemin de l'étape c) suivante.

c) Puis pour chaque graphe de transport et pour chaque sous-route, on détermine, par des optimisations de plus court chemin, un nombre prédéterminé de chemins possibles permettant de relier les différents noeuds identifiés successifs par des portions de route, chaque chemin possible comprenant les noeuds de passage reliant toutes les portions de route du chemin possible, et on calcule l'instant de passage de chaque noeud de passage à partir des vitesses moyennes associées à chaque portion de route, chaque chemin possible étant déterminé par la liste de tous les couples noeuds de passage - instants de passage dudit chemin possible ;

d) on détermine un indice de corrélation entre chacun des chemins possibles déterminés et le trajet parcouru déterminé, l'indice de corrélation étant représentatif de la proximité spatiale et/ou la proximité temporelle de chaque noeud successif identifié avec les emplacements du trajet ; et

e) on détermine le mode de transport de chaque sous-route du trajet, par détermination du mode de transport qui optimise l'indice de corrélation pour la sous-route du trajet.

Ce procédé permet de reconstruire un trajet de l'utilisateur (du téléphone de l'utilisateur) à partir de données spatiales et temporelles mesurées de résolution très faible, ce qui rend ce procédé transposable à d'autres données qui pourraient être mesurées avec une résolution spatiale et/ou temporelle supérieure.

De plus, le procédé peut permettre d'identifier les infrastructures routières à mettre en place et/ou les réseaux de transport (mobilité douce ou transports en commun) à développer et/ou de suivre l'évolution dans le temps des choix de mode de transport des utilisateurs dans une zone géographique donnée, en fonction par exemple de la mise en place des infrastructures routières ou des réseaux de transport.

En outre, après l'étape e), on peut déterminer les émissions polluantes sur chaque sous-route du trajet (et donc sur le trajet) en fonction du mode de transport déterminé sur la sous-route à l'étape e). De ce fait, l'invention peut concerner un procédé de détermination d'émissions polluantes sur un trajet. En effet, on peut caractériser l'utilisation de chaque mode de transport (train, tramway, métro, bus, RER, voiture, poids-route, moto, vélo, piéton) par une quantité d'émissions polluantes (dioxyde de carbone et/ou oxydes d'azote par exemple) émises par kilomètre. Ainsi, on peut déterminer la quantité d'émissions polluantes émises en fonction de la longueur du chemin possible pour la sous-route et du mode de transport déterminé. Additionnellement ou alternativement, on peut également déterminer le débit de véhicules et/ou d'usagers dans une sous-route (sur le chemin possible) en fonction du mode de transport déterminé à l'étape e). De ce fait, l'invention peut concerner un procédé de détermination de débit de véhicules et/ou d'usagers de transport en commun. En effet, en réalisant le procédé pour plusieurs trajets d'utilisateur sur une période déterminée, on peut déterminer le nombre de trajets en voiture ou dans les différents moyens de transport en commun et ainsi déterminer le nombre de voitures journalier ou hebdomadaire sur une portion de route et/ou le nombre d'usagers d'une portion d'un réseau de transport en commun.

Selon un mode de réalisation, on peut répéter les étapes pour une pluralité de trajets d'un même utilisateur et/ou pour une pluralité d'utilisateurs. Grâce à ce mode de réalisation de l'invention, en détectant les trajets d'un grand nombre d'utilisateurs, il est donc possible de savoir combien d'utilisateurs ont transité par les différentes voies des différents modes de transport que ce soient des transports en commun, des voies cyclables, routières ou pédestres dans un intervalle de temps donné. Cela permet donc d'estimer des débits des usagers (et éventuellement des véhicules associés) sur ces différentes voies.

En utilisant les données de sortie de la méthode (les choix de transport pour différents trajets et différents utilisateurs), il est possible de définir des modèles de choix de modes de transport qui sont une entrée fondamentale pour tout simulateur de trafic/mobilité, nécessaire aux études d'infrastructures routières ou de transport en commun.

Par ailleurs, ce procédé est robuste vis-à-vis des possibles arrêts de courte durée que peut faire l'utilisateur sur son trajet. En effet, grâce à la corrélation spatio-temporelle, on peut constater un vraisemblable arrêt de courte durée de l'utilisateur quand, alors qu'on peut globalement appairer les instants de passage d'un chemin possible aux instants du trajet (instants de connexion des antennes sur le trajet), on observe un décalage ponctuel local. On entend par « globalement appairer » les instants de passage d'un chemin possible aux instants du trajet, qu'on a un nombre suffisant d'instants de passage et d'instants du trajet qui coïncident, à une valeur de tolérance près.

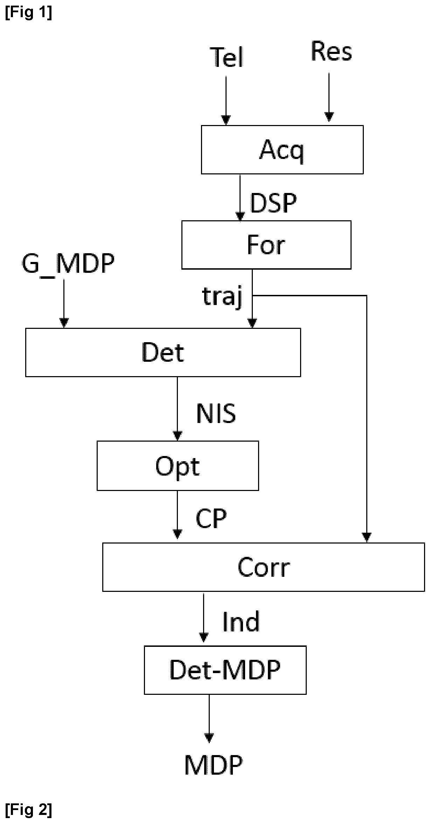

La figure 1 illustre, de manière schématique et non limitative, un diagramme bloc d'un premier mode de réalisation du procédé selon l'invention.

Dans ce procédé, on acquiert Acq des données spatiales et temporelles DSP de connexion à partir d'un téléphone Tel et d'un réseau Res de téléphonie mobile.

Les données spatiales et temporelles DSP comprennent les positions (ou certaines de ces positions après pré-traitement) des antennes auxquelles le téléphone s'est connecté et les instants de ces connexions.

Les données spatiales et temporelles DSP sont ensuite utilisées pour déterminer For un trajet traj à partir d'au moins un point de départ et un point d'arrivée, le trajet correspondant à une succession de positions d'antennes auxquelles le téléphone s'est connecté. Le trajet traj est composé de sous-routes qui relient les positions d'antennes successives auxquelles s'est connecté le téléphone Tel.

A partir de ce trajet traj et de graphes de transport G-MDP, chaque graphe de transport G_MDP étant représentatif d'un réseau de transport (routier, transport en commun ou mobilité douce), on détermine Det les noeuds identifiés successifs NIS de chaque graphe de transport, comme des noeuds du graphe de transport considéré comme les plus proches des positions des antennes auxquelles le téléphone s'est connecté sur le trajet (on peut également ne considérer que certaines de ces positions au lieu de toutes les considérer), tout en étant reliés les uns aux autres (autrement dit, il existe des portions de route permettant de relier les différents noeuds identifiés successifs entre eux).

A partir des noeuds identifiés successifs NIS, on réalise une optimisation des plus courts chemins Opt pour chaque sous-route de chaque graphe de transport de manière à identifier un nombre prédéterminé de chemins possibles CP pour chaque mode de transport.

Puis on évalue la corrélation Corr entre chaque chemin possible CP de chaque mode de transport et le trajet traj, composé des sous-routes et on détermine un indice de corrélation Ind. En optimisant la corrélation (via l'indice de corrélation Ind), on peut déterminer Det_MDP le mode de transport MDP de l'utilisateur sur le trajet.

Les étapes décrites ci-dessus peuvent être mises en oeuvre par des moyens informatiques, par exemple un ordinateur.

Dans la présente demande, la notion de « succession » ou « successif » indique une succession dans le temps (temporelle). Par exemple, deux emplacements sont successifs s'il s'agit de deux emplacements qui ont été identifiés temporellement l'un après l'autre. Avantageusement, on peut extraire un sous-graphe de chaque graphe de transport, le sous-graphe étant une partie du graphe de transport limitée à une largeur prédéterminée autour de chaque sous-route déterminée à l'étape a) et on utilise le sous-graphe au lieu du graphe de transport pour chacune des étapes b) à e). De ce fait, le sous-graphe présente un nombre limité de noeuds et de portions de route, ce qui permet de faciliter la détermination du mode de transport et d'autre part, de limiter les chemins possibles déterminés à l'étape c). Ainsi, on peut rapidement obtenir de nombreuses informations sur les modes de transport choisis par les utilisateurs en fonction de leur trajet et également les évolutions de ces informations dans le temps. De ce fait, il est plus facile de traiter les données, d'augmenter l'efficacité et la rapidité de la méthode, et de limiter la mémoire informatique nécessaire pour la mise en oeuvre de l'invention par ordinateur.

Les différentes étapes de la méthode vont être décrites plus précisément dans la suite de la description.

## Etape a) : acquisition (ou mesure ou enregistrement) des données spatiales et temporelles

Les données spatiales et temporelles sont acquises par ledit réseau de téléphonie mobile par exemple à l'aide d'un moyen de détection spatio-temporelle de l'antenne à laquelle le téléphone s'est connecté. Ces mesures sont bien connues de l'homme du métier. En effet, ces mesures sont utilisées par les opérateurs téléphoniques qui les utilisent par exemple pour la facturation de l'utilisateur.

La spécificité des données spatiales et temporelles de connexion réside dans le fait que les coordonnées géographiques enregistrées ne correspondent pas à la position du téléphone (et donc de l'utilisateur en mouvement), mais à la position de l'antenne à laquelle le téléphone s'est connecté. De plus, d'un point de vue temporel, l'instant de début et/ou de fin enregistré correspond à un événement téléphonique tel qu'un appel, un sms, ou un échange de données internet par exemple, mais ces instants ne correspondent pas à des moments effectifs de début ou fin de trajet de l'utilisateur (ou du téléphone, on suppose en effet que l'utilisateur a en permanence son téléphone mobile avec lui et que par conséquent, la position du téléphone est synchronisée avec celle de l'utilisateur). Ces données spatiales et temporelles de connexion sont donc des données avec un niveau d'information spatio-temporelle très faible pour déterminer les trajets d'un utilisateur.

L'avantage de ce type de données est qu'on peut avoir des informations spatiales et temporelles même quand l'utilisateur n'active pas de système GPS permettant de localiser de manière précise le téléphone.

Les données spatiales et temporelles de connexion sont donc plus abondantes et moins assujetties aux problèmes de biais statistique que les données usuellement utilisées telles que les données GPS.

Les données spatiales et temporelles de connexion peuvent notamment être des données NSD pour « Network Signal Data » (signifiant données de signal du réseau), qui sont générées dès qu'un téléphone se connecte à une antenne pour trouver du réseau, qu'elles qu'en soient les raisons : de ce fait, les données NSD sont enregistrées quasiment en permanence à partir du moment où le téléphone n'est pas en mode avion.

De préférence, les données spatiales et temporelles de connexion peuvent être des données CDR pour « Call Detail Records » (signifiant enregistrement de détail d'appel) qui sont un sous-ensemble des données NSD. Les données CDR sont celles qui permettent la facturation de l'utilisateur en fonction de son utilisation du téléphone via le réseau de téléphonie mobile. De ce fait, les données CDR comprennent, de préférence exclusivement, les données d'enregistrement de transactions téléphoniques constitué d'un identifiant permettant de reconnaître le téléphone de l'utilisateur, le type d'événement de connexion (appel, sms et/ou données d'échanges sur Internet), l'instant de début et l'instant de fin de l'évènement de connexion ainsi que la position de l'antenne à laquelle le téléphone était connecté au moment au l'évènement a eu lieu (donc la position de l'antenne par laquelle l'évènement a transité). Comparé aux données NSD, les données CDR sont des données spatiales et temporelles très faibles car elles ne considèrent que les événements nécessaires à la facturation par les opérateurs alors que les données NSD comprennent d'autres informations additionnelles. Etant qualitativement très faibles en termes de précision spatiale du téléphone et de fréquence temporelle, ces données CDR sont généralement exclues des procédés pour déterminer des trajectoires d'utilisateur et a fortiori pour déterminer des modes de transport sur ces trajectoires.

Néanmoins, ces données CDR offrent un taux de pénétration de la population très intéressant, c'est-à-dire qu'elles permettent de récupérer les données d'un plus grand nombre d'utilisateurs puisqu'aujourd'hui la plupart de la population possède un téléphone portable et qu'aucune application particulière ne doit être utilisée par l'utilisateur pour accéder à ces données.

En outre, autour de chaque position d'antenne, l'espace en 2D (le plan ou la surface donc) peut être divisé en cellules de Voronoi d'un diagramme de Voronoi. De manière générale, le diagramme de Voronoi est un découpage d'un plan (ou d'une surface) en cellules de Voronoi (les cellules étant des régions adjacentes les unes des autres) à partir d'un ensemble de points discrets. Chaque cellule de Voronoi enferme un seul et unique point discret et regroupe tous les points qui sont plus proches de ce point discret que de tout autre point discret. Dans notre application, les points discrets sont constitués par les positions des antennes situées dans la zone d'intérêt.

Certains évènements des données spatiales et/ou temporelles de connexion peuvent avoir un instant de début différent de l'instant de fin (par exemple pour un appel ou une connexion aux données mobiles pour Internet par exemple) mais d'autres évènements peuvent aussi avoir un instant de début égal à l'instant de fin, correspondant à l'envoi ou à la réception d'un SMS par exemple.

Une fois que les données spatiales et temporelles de connexion ont été acquises (mesurées), on détermine une succession de couples emplacements-instants définis par des emplacements correspondant à certaines desdites positions (ou à toutes les positions) des antennes issues des données spatiales et temporelles mesurées et par les instants mesurés de début et/ou de fin correspondant à ces emplacements. De préférence, on choisit certaines positions seulement des antennes comme emplacement des couples emplacements-positions : cela permet d'une part de restreindre les données à exploiter et à éviter notamment les effets miroirs des antennes, qui sont des effets indésirables.

Par effet miroir, on entend que le téléphone de l'utilisateur peut se connecter successivement à plusieurs antennes qu'il a à proximité de lui par exemple, parce que le trafic sur les antennes est important. Ce phénomène d'effet miroir peut laisser penser que l'utilisateur, donc le téléphone se déplace, alors qu'il est immobile. Par conséquent, on peut prétraiter les données spatiales et temporelles pour exclure les effets miroirs des couples emplacements-positions, par exemple en ne prenant pas en compte comme emplacements, la position des antennes voisines de la position de l'antenne précédente qui a été choisie comme emplacement.

Par exemple, lorsque que le téléphone de l'utilisateur s'est connecté à une antenne $A_i$ et que l'espace est divisé en cellules de Voronoi autour des positions d'antennes, le téléphone peut être situé dans la cellule de l'antenne à laquelle il s'est connecté mais aussi dans les cellules des antennes voisines. Ainsi, le téléphone est probablement situé dans l'ensemble des cellules de Voronoi voisines de $A_i$ à l'ordre $N_{neigh}$, noté $C(A_i, N_{neigh})$. $C(A_i, 0)$ est définie comme étant la cellule (unique) de Voronoi de l'antenne $A_i$, et $C(A_i, k + 1)$ comme étant l'union de $C(A_i, k)$ et ses cellules de Voronoi adjacentes.

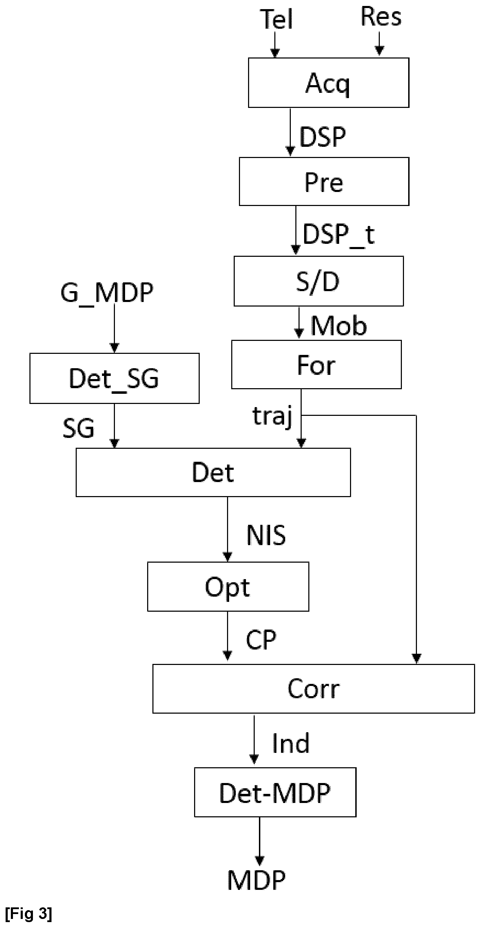

La figure 3 illustre de manière schématique et non limitative un exemple un diagramme de Voronoi avec un découpage en cellules de Voronoi autour de l'antenne A_i à laquelle le téléphone s'est connecté.

Les cellules de Voronoi sont représentées par les surfaces hexagonales et chaque antenne de chaque cellule de Voronoi est représentée par une croix. Le diagramme regroupe l'ensemble des cellules de Voronoi voisines de l'antenne $A\_i$ (à laquelle le téléphone s'est connecté) à l'ordre $N_{neigh}$ (ici $N_{neigh}$ = 2), noté $C(A\_i, 2)$. Les cellules $C(A\_i, 1)$ représentent les cellules de Voronoi grisées qui ont un côté adjacent (ou commun) avec la cellule $C(A\_i, 0)$ qui est définie comme étant la cellule (unique) de Voronoi de l'antenne $A\_i$, et les cellules $C(A\_i, 2)$ représentent les cellules de Voronoi voisines de la cellule $C(A\_i, 0)$ à l'ordre 2, c'est-à-dire que les cellules $C(A\_i, 2)$ ont un côté adjacent (ou commun) avec les cellules $C(A\_i, 1)$.

Une fois que la succession de couples emplacements-instants a été déterminée, on forme au moins une sous-route reliant deux couples emplacements-instants successifs (successifs dans le temps) dudit trajet, une succession des sous-routes déterminant le trajet parcouru. Ainsi, le trajet parcouru est composé d'une ou plusieurs sous-routes. Les sous-routes définies ici correspondent donc uniquement à des couples origine-destination et ne correspondent pas à des routes, voies ou chemins physiques comme des routes de réseau routier, ou des voies de train par exemple.

De préférence, on peut identifier des phases statiques de l'utilisateur à partir des données spatiales et temporelles acquises et on peut déterminer des phases de mobilité comme étant l'ensemble des phases qui ne sont pas des phases statiques.

Par exemple, on peut identifier une phase statique par le fait que pendant une durée prédéterminée, les positions des antennes qui ont été connectées au téléphone sont situées dans un espace restreint autour d'une antenne prédéfinie parmi ces antennes, l'espace restreint étant de préférence déterminé par l'ensemble des antennes voisines de l'antenne prédéfinie à un ordre prédéfini (via le diagramme de Voronoi évoqué précédemment par exemple). Ainsi, on évite les effets miroirs déjà évoqués précédemment et on limite le nombre de données à exploiter, ce qui facilite la recherche de solutions.

En utilisant les cellules de Voronoi décrites précédemment, on peut ainsi définir une phase statique du téléphone (donc de l'utilisateur), si le téléphone est resté dans la zone définie par l'ensemble des cellules de Voronoi voisines de $A_i$ à l'ordre $N_{neigh}$ $C(A_i, N_{neigh})$ pendant une durée supérieure à une durée prédéterminée $\Delta t$, par exemple pendant au moins 30 minutes.

Une fois que les phases statiques sont identifiées le trajet n de l'utilisateur $u_j$ peut être défini par un triplet $(t_{f,n}(u_j), t_{0,n+1}(u_j), u_j)$ où :

- $t_{f,n}(u_j)$ est l'instant qui termine la n-ième phase statique du téléphone $u_j$.
- $t_{0,n+1}(u_j)$ est l'instant qui commence la (n+1)-ième phase statique de du téléphone $u_j$.

A chaque phase de mobilité, on peut déterminer un trajet selon l'étape a). Ainsi, on peut réitérer les étapes a) à e) pour chaque trajet de chaque phase de mobilité, ce qui permet d'accroitre le nombre d'informations pour évaluer l'utilisation des différents modes de transport dans une zone géographique déterminée, par exemple une agglomération urbaine.

Selon une mise en oeuvre de l'invention, à l'étape a), on peut former le trajet par des points-étapes. Les points-étapes sont définis par des emplacements des couples emplacements-instants à des instants-étapes entre l'instant de départ et l'instant d'arrivée, les instants de départ et d'arrivée étant compris. De plus, les points de départ et d'arrivée peuvent correspondre aux emplacements des couples emplacements-instants, respectivement à l'instant de départ et à l'instant d'arrivée, l'instant de départ correspondant à l'instant de fin de la connexion de l'antenne au point de départ et l'instant d'arrivée correspondant à l'instant de début de la connexion de l'antenne au point d'arrivée. L'instant de départ correspond ainsi à la fin de la phase statique précédente et l'instant d'arrivée correspond ainsi au début de la phase statique suivante. On peut par exemple former le trajet depuis un point de départ (qui est un point-étape spécifique) à un instant de départ vers un point d'arrivée (qui est un autre point-étape spécifique) à un instant d'arrivée en passant de préférence par un ou plusieurs des points-étapes intermédiaires.

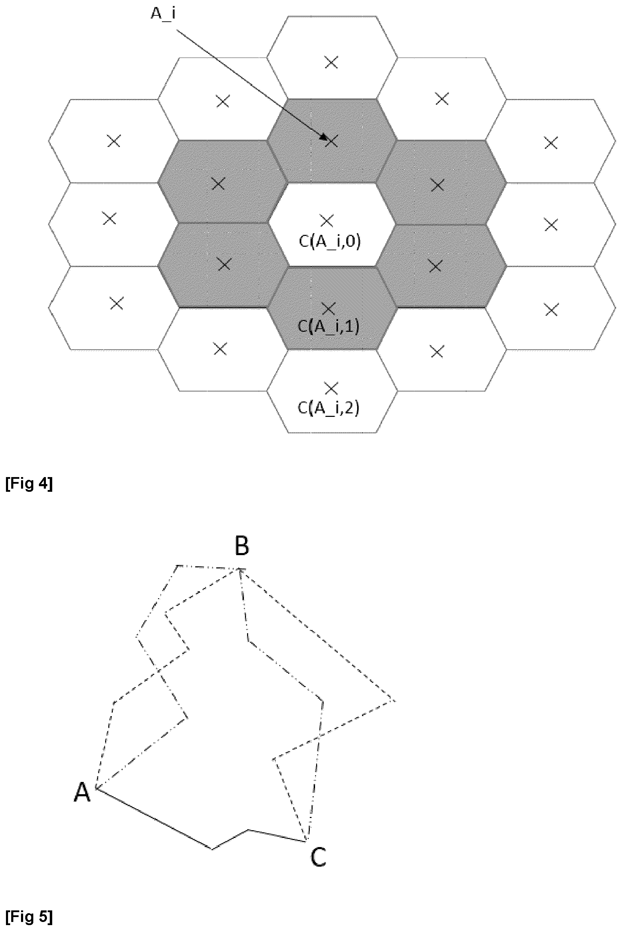

La figure 4 illustre de manière schématique et non limitative, un trajet sur lequel il est important de déterminer un point-étape intermédiaire B entre le point A et le point C. En effet, si un utilisateur se déplace du point de départ A vers un point d'arrivée C, sans qu'il ne soit tenu compte d'aucun point-étape intermédiaire (par exemple si l'utilisateur ne s'arrête pas suffisamment longtemps au point B pour détecter une phase statique), la solution trouvée par la méthode serait une solution du type de la ligne continue qui relie assez directement le point de départ A au point d'arrivée C, en fonctions des voies de liaisons accessibles (routes du réseau routier ou lignes de transport en commun par exemple) par les différents modes de transport.

En revanche, en ajoutant le point-étape B comme contrainte sur le trajet, les deux solutions représentées par les lignes respectivement en traits pointillés et mixtes, rejoignant les trois points A, B et C successivement correspondent beaucoup mieux au trajet réel de l'utilisateur.

Pour améliorer la précision, il est intéressant de définir des points-étapes pour contraindre la solution à passer à proximité de ces points-étapes, un point-étape étant un point intermédiaire qui n'est pas à proximité du trajet naturel allant du départ à l'arrivée. Toutefois, il est intéressant de limiter le nombre de points-étapes au strict nécessaire pour faciliter la méthode et la rendre plus facile et plus efficace. En effet, en détectant de trop nombreux points-étapes, la solution trouvée passerait par toutes les antennes auxquelles le téléphone a été connecté, ce qui ne serait pas réaliste, en raison des effets miroirs notamment.

Avantageusement, on peut déterminer successivement les points-étapes :

- en calculant la distance entre l'emplacement du point-étape précédent, le premier point-étape correspondant au point de départ, et chaque position d'antenne des données spatiales et temporelles de connexion à laquelle le téléphone s'est connecté après l'instant correspondant à l'emplacement du point-étape précédent, et

- en calculant l'accroissement de cette distance au cours du temps, le point-étape étant déterminé à la première position d'antenne au cours du temps pour laquelle l'accroissement de la distance est inférieur à un seuil prédéfini.

Ainsi, on peut détecter un début de retour ou un début de changement de direction lorsque l'accroissement devient inférieur au seuil déterminé. Ainsi, on peut identifier cette position d'antenne comme un point-étape en éliminant ainsi toutes les positions d'antenne précédentes (qui ne seront donc pas des points-étapes).

La figure 5 illustre de manière schématique et non limitative l'étape de détermination des points-étapes.

Le point-étape précédent PE_i est connu (déterminé précédemment ou correspondant au point de départ connu du trajet). Il correspond à une position d'antenne à laquelle le téléphone s'est connecté.

Pour tous les instants successifs, $t_j$, $t_{j+1}$, $t_{j+2}$, $t_{j+3}$, $t_{j+4}$, $t_{j+5}$ avec $t_j < t_{j+1} < t_{j+2} < t_{j+3} < t_{j+4} < t_{j+5}$ tous situés après l'instant correspondant au point-étape PE_i, on analyse la distance entre les différentes positions d'antennes successives auxquelles le téléphone s'est connecté, ces positions d'antennes successives étant représentées par les points $A_j$, $A_{j+1}$, $A_{j+2}$, $A_{j+3}$, $A_{j+4}$, $A_{j+5}$ aux instants respectifs $t_j$, $t_{j+1}$, $t_{j+2}$, $t_{j+3}$, $t_{j+4}$, $t_{j+5}$, des couples $A_j,t_j$, $A_{j+1},t_{j+1}$, $A_{j+2},t_{j+2}$, $A_{j+3},t_{j+3}$, $A_{j+4},t_{j+4}$, $A_{j+5},t_{j+5}$, avec la position de PE_i.

On peut remarquer que de $t_j$ à $t_{j+4}$, la distance que l'on vient de définir augmente progressivement et que les positions d'antennes successives semblent plus ou moins décrire un trajet cohérent. Ainsi, tant que la distance croit, on ne définit pas de point-étape.

En revanche, on peut remarquer que la distance entre le point PE_i et le point $A_{j+4}$ est supérieure à celle entre le point-étape PE_i et le point $A_{j+5}$. Cette diminution de la distance semble penser qu'un changement de direction s'opère. L'accroissement de la distance devient donc négatif (le seuil est égal à zéro ici) et on identifie donc le couple $A_{j+4},t_{j+4}$ comme le point-étape qui suit le point PE_i.

Ainsi, on peut éliminer les positions d'antenne qui sont relativement toujours dans une même direction depuis l'emplacement précédent.

De ce fait, on effectue un filtrage efficace des positions d'antenne pour ne retenir que les informations pertinentes pour le trajet, c'est-à-dire un changement de direction significatif. Cela permet d'augmenter l'efficacité de la méthode ainsi que sa rapidité.

Par ailleurs, on peut ajouter une étape de filtrage supplémentaire en utilisant les cellules de Voronoi et en ne considérant un point étape qu'à la condition qu'il ne soit pas compris dans l'ensemble des cellules de Voronoi autour de la cellule de Voronoi de la position de l'antenne correspondant au point de passage précédent, à l'ordre $N_{neigh}$ (de préférence égal à 2).

Avantageusement, on peut prétraiter les données spatiales et temporelles de connexion acquises par le réseau de téléphonie mobile, pour ne retenir que les données correspondant à celles du téléphone de l'utilisateur, les données spatiales et temporelles de connexion enregistrées sur le réseau comprenant par ailleurs les données de connexion de tous les téléphones connectés au réseau. De ce fait, il est plus facile de traiter les données, d'augmenter l'efficacité et la rapidité de la méthode, et de limiter la mémoire informatique nécessaire pour la mise en oeuvre de l'invention.

En effet, les données spatiales et temporelles acquises sur le réseau de téléphonie mobile sont extrêmement massives, notamment les données CDR. Une journée de ces données représente en moyenne entre 6 et 7 Go de données stockées au format CSV (pour minimiser la taille du stockage de ces données, grâce aux encodages spécifiques pour les latitudes et longitudes notamment). De plus, certaines de ces données peuvent être en dehors de la zone d'intérêt, par exemple, en dehors d'une agglomération qui fait l'objet d'une étude afin de développer le réseau routier et/ou le réseau de transports en commun.

En prétraitant les données spatiales et temporelles de connexion acquises sur le réseau de téléphonie mobile, on peut éliminer les données non nécessaires, en dehors de la zone d'intérêt par exemple et on peut ainsi diviser par deux la taille du stockage de ces données.

**Etape b) : détermination des positions du téléphone sur des noeuds identifiés successifs**

Lors de cette étape, on détermine les positions successives du téléphone de l'utilisateur sur des noeuds identifiés successifs du graphe de transport à partir des couples emplacements-instants, les noeuds identifiés successifs étant positionnés le plus près possible de chaque emplacement. En d'autres termes, on positionne l'utilisateur (ou son téléphone) sur le graphe de transport considéré à partir de la position de l'antenne à laquelle le téléphone s'est connecté. Cela permet de retracer les grandes étapes du trajet.

Préférentiellement, à l'étape b), on peut identifier les noeuds successifs de la manière suivante :

i) on peut identifier le noeud de départ comme étant le noeud du graphe de transport le plus proche possible de l'emplacement du couple emplacement-instant du premier instant du trajet (par exemple l'instant de départ de la phase de mobilité), l'emplacement correspondant à une position d'antenne à laquelle le téléphone s'est connecté ;

ii) puis pour chaque couple emplacement-instant suivant, on identifie le noeud le plus proche de l'emplacement de ce couple emplacement-instant qui soit relié par des portions de route au noeud identifié du couple emplacement-instant précédent. Par « être relié par des portions de route » on entend, que pour deux noeuds successifs identifiés, il est nécessaire qu'un chemin (physique, c'est-à-dire une route, une piste cyclable, un chemin pédestre ou une ligne de transports en commun) soit possible entre les deux noeuds successifs identifiés. Si on a restreint le graphe de transport à un sous-graphe de zone restreinte tel qu'évoqué précédemment, certains noeuds peuvent par exemple ne pas être reliés à d'autres noeuds. S'il n'y a pas de solution possible, on peut réaliser les étapes suivantes:

a1) on réitère l'étape ii) pour le couple emplacement-instant précédent pour identifier le noeud suivant le plus proche, c'est-à-dire le noeud le plus proche de l'emplacement du couple emplacement-instant précédent après celui qui était choisi à l'itération précédente de l'étape ii) ;

a2) si l'étape a1) ne permet pas de trouver une solution, on revient à l'étape i) où on identifie le noeud suivant le plus proche l'emplacement du couple emplacement-instant du premier instant du trajet, c'est-à-dire le noeud le plus proche de l'emplacement du couple emplacement-instant correspondant au premier instant du trajet (à l'instant de départ par exemple, à l'instant de début de la phase de mobilité) après celui qui était choisi à l'itération précédente de l'étape i).

Si on utilise un sous-graphe en remplacement du graphe de transport complet, le sous-graphe étant une partie du graphe de transport limitée à une largeur prédéterminée autour de chaque sous-route déterminée à l'étape a), on peut à l'issue de l'étape a2), si aucune solution n'a été trouvée, ajouter une étape a3) dans laquelle on augmente la largeur prédéterminée autour d'au moins la sous-route sur laquelle aucune solution n'a pu être trouvée de manière à augmenter la taille du graphe pour trouver au moins une solution puis on réitère les étapes i) et ii).

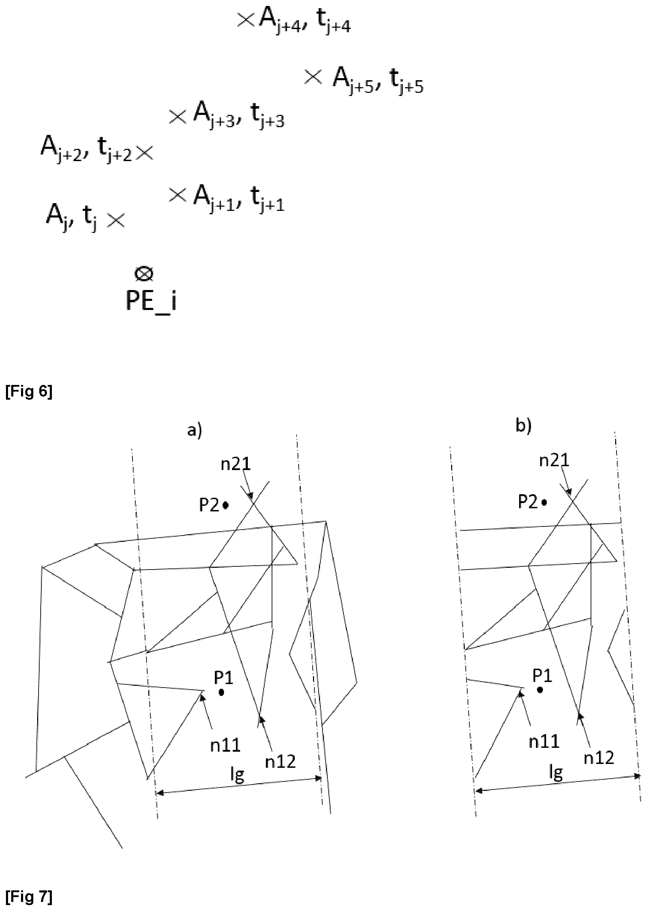

La figure 6 illustre, de manière schématique et non limitative, l'identification de noeuds successifs à proximité des emplacements déterminés P1 et P2 successifs.

Le schéma a) représente le graphe complet (de transport) et le schéma b) représente un sous-graphe du graphe complet représenté au schéma a) et limité à une largeur lg autour de la sous-route reliant l'emplacement P1 à l'emplacement P2. Ces graphe/sous-graphe représentent les graphes de transport d'un même réseau, par exemple, un réseau routier. Sur ces schémas, les segments représentent les portions de route du graphe de transport et les points de jonctions entre ces segments ainsi que les points d'extrémités représentent les noeuds du graphe.

Les emplacements P1 et P2 correspondent à des positions d'antennes et ne sont donc pas corrélés aux noeuds des graphes et sous-graphes des schémas a) et b). P1 est le point de départ.

Les traits mixtes représentés sur les schémas représentent les délimitations de la largeur lg du sous-graphe.

Sur le schéma a) du graphe complet, le noeud n11 est le plus proche de l'antenne P1 et il est bien relié au noeud 21 qui est le plus proche de l'antenne P2. Ainsi, les noeuds identifiés seront ici n11 et n21 car on ne délimite pas le graphe complet aux traits mixtes (qui sont là uniquement pour représenter comme le schéma b) est obtenu à partir du schéma a)).

Par noeuds reliés, on entend que les noeuds ne sont pas nécessairement reliés par une seule et unique sous-route permettant de les rejoindre directement mais qu'il existe au moins un ensemble de sous-route permettant de se déplacer d'un noeud à l'autre.

Sur le schéma b), le sous-graphe extrait du graphe complet ne permet pas de relier tous les noeuds de façon à trouver un chemin les reliant. Par exemple, le noeud n11 n'est pas relié au noeud n12, ni au noeud n21 : on ne peut pas trouver à partir du sous-graphe un chemin allant du noeud n11 vers le noeud n12 ou vers le noeud n21. En revanche, le noeud n12 qui est le deuxième noeud le plus proche de P1 (donc le noeud le plus proche de P1 après le noeud n11) est relié au noeud n21. Pour le sous-graphe du schéma b), les noeuds identifiés sont donc les noeuds n12 et n21.

**Etape c) : détermination d'un nombre prédéterminé de chemins possibles pour chaque sous-route de chaque graphe de transport.**

Lors de cette étape, pour chaque graphe de transport et pour chaque sous-route, on détermine, par des optimisations de plus court chemin, un nombre prédéterminé de chemins possibles permettant de relier les différents noeuds identifiés successifs par des portions de route, chaque chemin possible comprenant les noeuds de passage reliant toutes les portions de route du chemin possible, et on calcule l'instant de passage de chaque noeud de passage à partir des vitesses moyennes associées à chaque portion de route, chaque chemin possible étant déterminé par la liste de tous les couples noeuds de passage - instants de passages dudit chemin possible. De ce fait, on peut identifier des chemins possibles que l'utilisateur aurait emprunté pour chaque mode de transport. Ces chemins seront ensuite comparés aux données du trajet parcouru.

Selon une mise en oeuvre avantageuse de l'invention, à l'étape c), on peut déterminer le nombre prédéterminé de chemins possibles par une optimisation au plus court chemin de manière séquentielle, c'est-à-dire qu'on détermine chaque chemin possible l'un après l'autre. De plus, une fois qu'un chemin possible a été trouvé, on affecte un coefficient de pénalité à la vitesse des portions de route utilisées dans ce chemin possible de manière à forcer la recherche d'un chemin distinct des chemins possibles trouvés précédemment dans cette étape. Cette méthodologie permet d'accélérer la recherche de chemins possibles et ainsi obtenir une méthode de détermination du mode de transport plus rapide et plus efficace.

**Etape d) : détermination d'un indice de corrélation**

Lors de cette étape, on détermine un indice de corrélation entre chacun des chemins possibles déterminés et le trajet parcouru déterminé, l'indice de corrélation étant représentatif de la proximité spatiale et/ou la proximité temporelle de chaque noeud identifié successif avec les emplacements du trajet. En d'autres termes, lorsque que cet indice est optimal (maximal ou minimal en fonction de sa définition), il y a une bonne corrélation entre le trajet parcouru et le chemin possible déterminé.

Selon une mise en oeuvre de l'invention, à l'étape d), on peut déterminer l'indice de corrélation à partir de la composante de similarité spatiale $J_{spat}$ suivante :

$$J_{spat}(X, \widehat{X}) = \sum_{i=1}^{N_{sample}} \widetilde{d}(X(t_i), \widehat{X}, t_i)$$

$$\widetilde{d}(X(t_i), \widehat{X}, t_i) = \min_{t_j \leq t_i} d\left(X(t_i), \widehat{X}(t_j)\right)$$

Où $X(t_i)$) correspond aux emplacements des couples emplacements-instants à chaque instant $t_i$ (du couple emplacements-instants) et où $\widehat{X}(t_j)$ correspond aux noeuds de passage du chemin possible à chaque instant $t_j$ (correspondant aux noeuds de passage), la fonction d mesurant la distance entre $X(t_i)$) et $\widehat{X}(t_j)$ et $N_{sample}$ correspondant aux nombres d'emplacements du trajet.

La composante de similarité spatiale permet de prendre en compte la proximité géographique (ou spatiale) entre les emplacements qui correspondent à des positions d'antenne auxquelles le téléphone s'est connecté sur le trajet et les noeuds de passage identifiés. De plus, une certaine similarité temporelle est indirectement intégrée à cette composante de similarité spatiale par l'utilisation des instants $t_i$ et $t_j$. En effet, par exemple, si un chemin possible identifié pour le mode de transport « marche » se superpose bien aux sous-routes du trajet mais que ce chemin possible a une longueur de 40 km et qu'il a été réalisé en moins d'une heure, la valeur de $J_{spat}$ sera élevée, parce qu'il semble peu plausible d'avoir fait ce trajet en marchant, les instants de passage et les instants-étapes seront forcément décalés, ce qui a pour incidence d'augmenter très nettement la valeur de $J_{spat}$.

Additionnellement ou alternativement, à l'étape d), on peut déterminer l'indice de corrélation à partir de la composante de similarité de mouvement $J_{mouv}$ suivante :

$$J_{mouv}(x) = (\log(x+1) - \log(2))^2 + \left(\log\left(\frac{1}{x} + 1\right) - \log(2)\right)^2$$

Où

$$x = F_{med}\left(\frac{d\widehat{t}}{dt}(X, \widehat{X})\right)$$

et

$$\widehat{t}(t_i) = \arg\min_{t_j} d\left(X(t_i), \widehat{X}(t_j)\right)$$

Où $X(t_i)$) correspond aux emplacements des couples emplacements-instants à chaque instant $t_i$ (correspondant

à l'emplacement du couple emplacement-instant) et où $\hat{X}(t_j)$ correspond aux noeuds de passage du chemin possible à chaque instant $t_j$ (du noeud de passage correspondant), la fonction d mesurant la distance entre $X(t_i)$ et $\hat{X}(t_j)$ et $F_{med}$ étant la fonction de filtre médian.

La fonction de filtre médian est une fonction qui consiste à remplacer chaque valeur par la valeur médiane de son voisinage et qui permet, lorsqu'elle est appliquée à la dérivée de $\hat{t}(t_i)$, d'éliminer les valeurs aberrantes et d'éliminer certains arrêts de courte durée.

Si la dynamique du chemin possible et celle du trajet parcouru (composé des sous-routes) est similaire, la dérivée filtrée de t(t) doit être proche de 1 et est comprise entre 0 et l'infini.

La fonction utilisée pour $J_{mouv}$ est avantageuse car elle est symétrique autour de 1 dans l'espace logarithmique, comme le montre la figure 7 qui représente schématiquement et de manière non limitative la fonction $J_{mouv}(x)$ en fonction de x en échelle logarithmique, la fonction étant bien symétrique par rapport à x égal à 1.

La composante de mouvement permet de prendre en compte la corrélation temporelle entre les emplacements qui correspondent à des positions d'antennes auxquelles le téléphone s'est connecté sur le trajet, aux noeuds de passage. En d'autres termes, elle sert à évaluer la synchronicité à la fois dans l'espace et dans le temps entre les chemins possibles et les sous-routes du trajet parcouru par le téléphone de l'utilisateur.

De préférence, l'indice de corrélation $J_{prox}$ peut être déterminé à partir des deux composantes déterminées précédemment, notamment par la formule suivante :

$$J_{prox}\big(X, \hat{X}\big) = \lambda \cdot J_{spat}\big(X, \hat{X}\big) + (1 - \lambda) \cdot J_{mouv}\big(X, \hat{X}\big)$$

Avec $J_{prox}$ et $J_{spat}$ qui correspondent aux composantes de similarité spatiale et de mouvement décrites précédemment, et où l'indice de pondération $\lambda$ est compris entre 0 et 1. Si $\lambda$ est égal à 0, seule la composante de mouvement $J_{mouv}$ est prise en compte dans l'indice de corrélation $J_{prox}$. Si $\lambda$ est égal à 1, seule la composante de similarité spatiale $J_{spat}$ est prise en compte dans l'indice de corrélation $J_{prox}$. Une valeur de $\lambda$ comprise entre 0 et 1 permet de favoriser plus ou moins la proximité spatiale ou la similarité de mouvement dynamique.

De préférence, la valeur de l'indice de pondération est supérieure à 0,5 de manière à prioriser la composante de similarité spatiale $J_{spat}$ devant la composante de similarité de mouvement $J_{mouv}$ En effet, si la composante de similarité spatiale $J_{spat}$ a une valeur élevée, on peut d'ores et déjà éliminer le chemin possible correspondant, alors que la composante de similarité de mouvement $J_{mouv}$ a pour but de préciser la corrélation lorsque plusieurs chemins possibles ont des valeurs de composantes de similarité spatiales $J_{spat}$ proches les uns des autres.

**Etape e) : détermination du mode de transport de chaque sous-route.**

Lors de cette étape, on détermine le mode de transport de chaque sous-route du trajet, par détermination du mode de transport qui optimise l'indice de corrélation pour la sous-route du trajet déterminé à l'étape précédente. En d'autres termes, le mode de transport déterminé correspond au mode de transport pour lequel l'indice est optimal (par exemple maximal ou minimal en fonction de sa définition).

De manière à faciliter la détermination du mode de transport de chaque sous-route, à l'étape e), on peut déterminer un score S par la formule suivante :

$$S = \frac{\tanh \hat{J} + 1}{2}$$

Avec

$$\hat{J} = \frac{J_{prox} - \mathbb{E}(J_{prox})}{std(J_{prox})}$$

$J_{prox}$ étant l'indice de corrélation défini à l'étape d), $\mathbb{E}(J_{prox})$ étant l'espérance de l'indice de corrélation $J_{prox}$ et $std(J_{prox})$ étant l'écart-type de l'indice de corrélation $J_{prox}$.

Avec un score défini selon la formule précédente, le score est compris entre 0 et 1 : plus la valeur est proche de 1, plus la corrélation spatiale et/ou temporelle est correcte ; au contraire, plus le score s'approche de 0, plus la corrélation spatiale et/ou temporelle s'avère imprécise. De ce fait, il est plus aisé de déterminer le mode de transport par celui correspondant au graphe de transport (ou au sous-graphe) qui permet de maximiser le score (qui permet de s'approcher au plus près de 1).

En déterminant le mode de transport par le score tel que défini, on peut déterminer le mode de transport de manière simple en évitant des fonctions statistiques et de probabilités qui complexifieraient la détermination du mode de transport.

L'invention concerne aussi un produit programme d'ordinateur téléchargeable depuis un réseau de communication et/ou enregistré sur un support lisible par ordinateur et/ou exécutable par un processeur ou un serveur, comprenant des instructions de code de programme pour la mise en oeuvre du procédé de détermination du mode de transport tel que décrit précédemment, lorsque ledit programme est exécuté sur un ordinateur ou un téléphone portable.

La figure 2 illustre, de manière schématique et non limitative, un diagramme bloc d'un deuxième mode de réalisation du procédé selon l'invention.

Dans ce procédé, on acquiert Acq des données spatiales et temporelles DSP de connexion à partir d'un téléphone Tel et d'un réseau Res de téléphonie mobile.

Les données spatiales et temporelles DSP sont prétraitées Pre pour ne conserver que certaines des positions d'antennes auxquelles le téléphone s'est connecté et en éliminant les données correspondant à d'autres téléphones (différent du téléphone qui nous intéresse). Par exemple, le pré-traitement peut exclure les antennes voisines d'une antenne précédente à l'ordre 2.

Ainsi, les données spatiales et temporelles prétraitées DSP_t correspondent à certaines positions des antennes auxquelles le téléphone s'est connecté et les instants de ces connexions.

Les données spatiales et temporelles prétraitées DSP_t sont ensuite utilisées pour déterminer S/D des phases statiques et de mobilité Mob de l'utilisateur.

Puis pour chaque phase de mobilité Mob, on peut déterminer For un trajet traj à partir d'au moins un point de départ et un point d'arrivée, le trajet correspondant à une succession de positions d'antennes auxquelles le téléphone s'est connecté. Le trajet traj est composé de sous-routes qui relient les positions d'antennes successives auxquelles s'est connecté le téléphone Tel.

A partir de graphes de transport G-MDP, chaque graphe de transport G_MDP étant représentatif d'un réseau de transport (routier, transport en commun ou mobilité douce)on peut extraire Det-SG un sous graphe SG de transport limité à une largeur déterminé autour de chaque sous-route du trajet.

Puis, à partir de chaque sous-graphe SG de chaque mode de transport et du trajet traj, on détermine Det les noeuds identifiés successifs NIS de chaque graphe de transport, comme des noeuds du graphe de transport considéré comme les plus proches des positions des antennes auxquelles le téléphone s'est connecté sur le trajet (on peut également ne considérer que certaines de ces positions au lieu de toutes les considérer), tout en étant reliés les uns aux autres (autrement dit, il existe des portions de route permettant de relier les différents noeuds identifiés successifs entre eux).

A partir des noeuds identifiés successifs NIS, on réalise une optimisation des plus courts chemins Opt pour chaque sous-route et chaque sous graphe de transport de manière à identifier un nombre prédéterminé de chemins possibles CP pour chaque mode de transport.

Puis on évalue la corrélation Corr entre chaque chemin possible CP de chaque mode de transport et le trajet traj, composé des sous-routes et on détermine un indice de corrélation Ind. En optimisant la corrélation (via l'indice de corrélation Ind), on peut déterminer Det_MDP le mode de transport MDP de l'utilisateur sur le trajet.

## Exemple

Le procédé de l'invention a été appliqué pour identifier le mode de transport d'un trajet à partir de données CDR issues de l'acquisition sur le réseau de téléphonie mobile du téléphone d'un utilisateur et comparé avec un procédé de l'art antérieur.

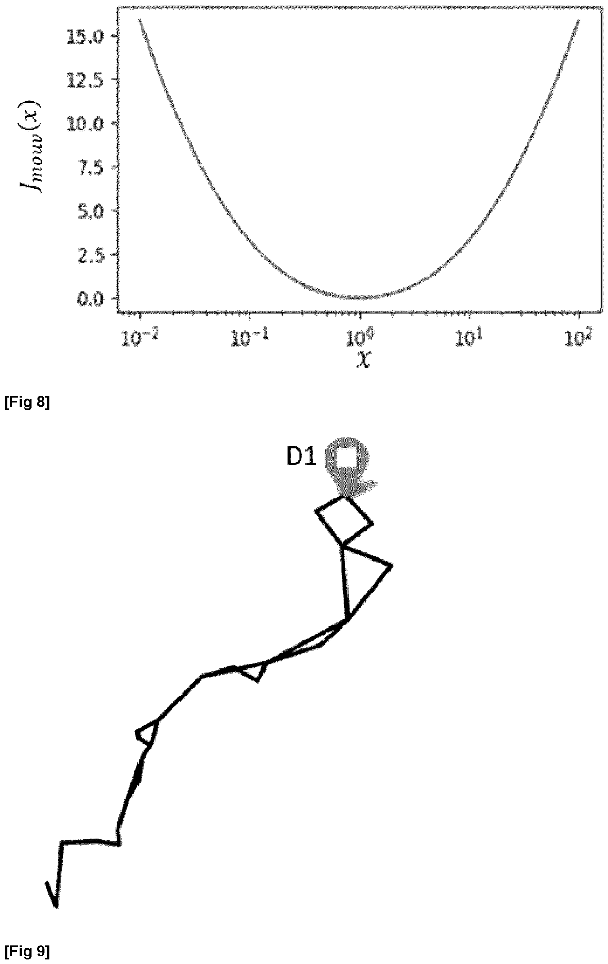

Dans cet exemple, le trajet parcouru par l'utilisateur est représenté en figure 8 où le point D1 est à la fois le point de départ et le point d'arrivée du trajet l'utilisateur. Elle représente par conséquent un aller-retour.

Pour le procédé de l'invention, les différents réseaux de transport suivant ont servi à la réalisation des graphes de transport pour chacun des modes de transport suivants :

- **Voiture :** Réseau HERE ™ Maps obtenu à partir des données de cartographie, le temps de traverser des différentes portions de route du graphe représentatif du réseau dépend de la congestion moyenne du trafic pour une heure donnée de la journée.
- **Moto :** Même réseau HERE ™ Maps que pour la voiture, mais l'on considère être tout le temps en conditions fluides (on ne tient pas compte de la congestion du trafic).
- **Vélo :** Réseau HERE ™ Maps pour les piétons et vélos où l'on considère une vitesse moyenne de 12 km/h sur les portions de route.

- **Marche :** Même réseau HERE ™ Maps que pour le vélo, où l'on considère une vitesse moyenne de 3,5 km/h sur les portions de toute.

Du fait que le point D1 est à la fois le point de départ et le point d'arrivée, il est nécessaire d'identifier au moins un point-étape tel que décrit précédemment, au moyen du procédé selon l'invention. Ce point-étape D2 est visible sur la figure 9 (où D1 figure également).

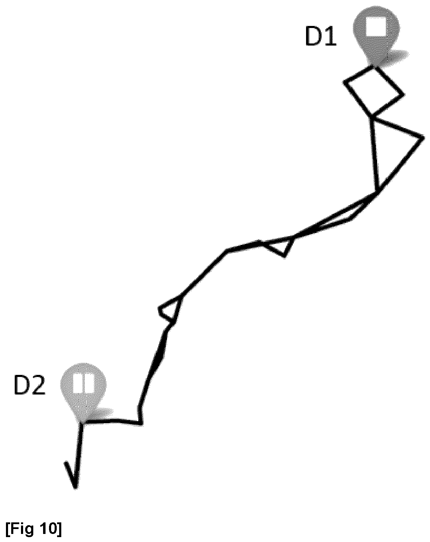

Sur la figure 10, on peut visualiser les cellules de Voronoi qui sont représentées en gris clair, une (et une seule) antenne du réseau de téléphonie étant associée à chaque cellule de Voronoi.

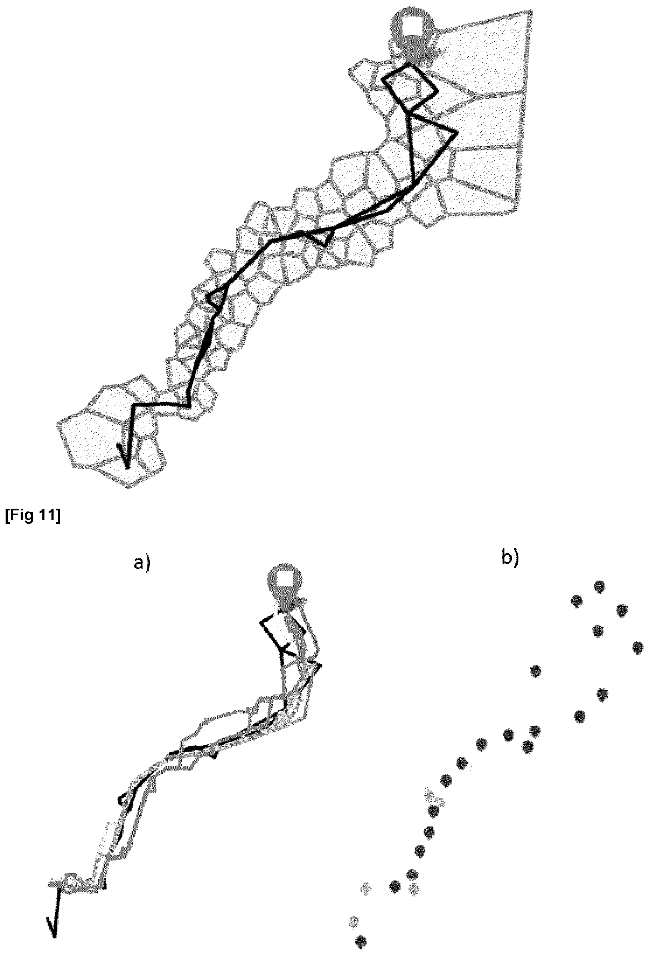

La figure 11 illustre les différents chemins obtenus par les optimisations de plus court chemin pour les différents modes de transport (il s'agit les différentes lignes en dégradé de gris) par le procédé de l'invention (schéma a) et les compare à l'outil de l'art antérieur HERE ™ Maps (https://tcs.ext.here.com/examples/v3/afe_match_transport) dont la solution est illustrée sur la figure 11 est représentée par les différents points sur le schéma b).

Le tableau [Table1] suivant illustre les valeurs des composantes de similarité spatiale $J_{spat}$, de similarité de mouvement $J_{mouv}$ et du score S selon la formule décrite précédemment pour les chemins possibles les plus pertinents obtenus par le procédé de l'invention. Dans ce tableau, il peut y avoir plusieurs chemins possibles avec un même mode de transport, c'est pourquoi, il y a plusieurs lignes par mode de transport.

[Table 1]

| Mode de transport | $S$ | $J_{spat}$ | $J_{mouv}$ | Mode de transport | $S$ | $J_{spat}$ | $J_{mouv}$ |
|---|---|---|---|---|---|---|---|
| MOTO | 0.946 | 0.445 | 0.515 | VELO | 0.197 | 5.357 | 0.126 |
| MOTO | 0.936 | 0.514 | 0.522 | VELO | 0.192 | 5.460 | 0.098 |
| MOTO | 0.890 | 0.808 | 0.509 | VELO | 0.184 | 5.576 | 0.097 |
| VOITURE | 0.818 | 1.216 | 0.459 | MARCHE | 0.104 | 7.094 | 0.342 |
| VOITURE | 0.747 | 1.831 | 0.160 | MARCHE | 0.104 | 7.063 | 0.390 |
| VOITURE | 0.647 | 2.200 | 0.217 | | | | |

Les meilleurs scores étant obtenus pour la moto, qui plus est, avec une différence assez nette comparativement aux autres moyens de transport, on détermine par le procédé selon l'invention que le trajet de l'utilisateur a eu lieu en moto. En effet, la rapidité du trajet n'est pas compatible avec la voiture, ni avec les autres moyens de transport (on peut noter les scores très faibles de la marche et du vélo).

L'outil de l'art antérieur HERE ™ Maps place des points sur une carte. Les variations de couleurs des points correspondant à différents modes de transport, le noir représentant un transport routier (ne distinguant pas la voiture de la moto) et le gris clair étant un mode de transport indéterminé par l'outil. Ainsi, le schéma b) de la figure 11 montre que la majorité des points correspondent à du transport routier, ce qui est en accord avec le procédé de l'invention mais le procédé de l'art antérieur ne permet pas de préciser s'il s'agit de moto, de voiture, de vélo ou même de marche. Par ailleurs, l'outil manque de précision puisqu'il n'est pas capable de définir de moyens de transport sur certaines portions.

Ainsi, le procédé de l'invention permet de déterminer le mode de transport d'un trajet, de manière précise grâce à des données CDR qui ont une faible résolution spatiale et temporelle. Ainsi, il est possible d'exploiter rapidement et à moindres frais, les données de bons nombres d'utilisateurs afin de déterminer leurs modes de transport et les évolutions de ces modes de transport au cours du temps. Le choix de ces différents modes de transport du plus grand nombre possible d'utilisateurs est particulièrement pertinent pour les évolutions des aménagements routiers, de mobilité douce et/ou le développement des transports en commun. Bien que l'exemple ici illustré ne tienne pas compte des réseaux de transport en commun, celui-ci pourrait être ajouté sans sortir du cadre de l'invention. Il est bien évident que, de manière générale, les transports en commun sont parmi les choix possibles de transport des utilisateurs et qu'ils sont bien évidemment compris dans l'invention.

**Revendications**

1. Procédé de détermination d'un mode de transport (MDP) d'un trajet (traj) parcouru par au moins un utilisateur, au moyen d'un réseau (Res) de téléphonie mobile, du téléphone mobile (Tel) de l'utilisateur apte à se connecter à des antennes dudit réseau (Res) de téléphonie mobile et au moyen de graphes de transport (G_MDP) pour chaque mode de transport ou combinaison de mode de transport, chaque graphe de transport (G_MDP) comprenant des noeuds, des portions de routes reliant les différents noeuds et les vitesses moyennes de déplacement sur chaque portion de route, chaque portion de route du graphe de transport (G_MDP) représentant les routes possibles par le mode de transport associé, dans lequel on met en oeuvre au moins les étapes suivantes :

a) on acquiert (Acq) des données spatiales et temporelles (DSP) de connexion du téléphone (Tel) au réseau (Res) de téléphone mobile, les données spatiales et temporelles (DSP) comprenant les positions des antennes auxquels le téléphone (Tel) s'est connecté et les instants de début et de fin auxquels ont lieu ces connexions du téléphone aux antennes, on détermine une succession de couples emplacements-instants définis par des emplacements correspondant à certaines desdites positions des antennes issues des données spatiales et temporelles (DSP) acquises et par les instants acquis de début et/ou de fin correspondant à ces emplacements, et on forme (For) au moins une sous-route reliant deux couples emplacements-instants successifs dudit trajet (traj), une succession des sous-routes déterminant le trajet (traj) parcouru ;

b) Pour chaque graphe de transport (G_MDP), on détermine (Det) les positions successives du téléphone de l'utilisateur sur des noeuds identifiés successifs (NIS) du graphe de transport (G_MDP) à partir des couples emplacements-instants, les noeuds identifiés successifs (NIS) étant positionnés le plus près possible de chaque emplacement ;

c) Puis pour chaque graphe de transport (G_MDP) et pour chaque sous-route, on détermine (Opt), par des optimisations de plus court chemin, un nombre prédéterminé de chemins possibles (CP) permettant de relier les différents noeuds identifiés successifs (NIS) par des portions de route, chaque chemin possible (CP) comprenant les noeuds de passage reliant toutes les portions de route du chemin possible (CP), et on calcule l'instant de passage de chaque noeud de passage à partir des vitesses moyennes associées à chaque portion de route, chaque chemin possible (CP) étant déterminé par la liste de tous les couples noeuds de passage - instants de passages dudit chemin possible (CP) ;

d) on détermine (Corr) un indice de corrélation (Ind) entre chacun des chemins possibles (CP) déterminés et le trajet (traj) parcouru déterminé, l'indice de corrélation (Ind) étant représentatif de la proximité spatiale et/ou de la proximité temporelle de chaque noeud identifié successif (NIS) avec les emplacements du trajet (traj) ; et

e) on détermine (Det_MDP) le mode de transport (MDP) de chaque sous-route du trajet, par détermination du mode de transport qui optimise l'indice de corrélation (Ind) pour la sous-route du trajet.

2. Procédé selon la revendication 1, pour lequel les données spatiales et temporelles (DSP) comprennent, de préférence exclusivement, des données d'enregistrement de transactions téléphoniques constituées d'un identifiant du téléphone (Tel) de l'utilisateur sur le réseau (Res), du type d'évènements de connexion du téléphone (Tel) au réseau (Res), un instant de début et un instant de chaque événement de connexion du téléphone au réseau de téléphonie mobile et la position de l'antenne du réseau de téléphonie mobile à laquelle s'est connecté le téléphone.

3. Procédé selon l'une des revendications précédentes, pour lequel on extrait (Det_SG) un sous-graphe (SG) de chaque graphe de transport (G_MDP), le sous-graphe (SG) étant une partie du graphe de transport limité à une largeur prédéterminée (lg) autour de chaque sous-route déterminée à l'étape a) et on utilise le sous-graphe (SG) au lieu du graphe de transport (G_MDP) pour chacune des étapes b) à e).

4. Procédé selon l'une des revendications précédentes, dans lequel on identifie (S/D) des phases statiques de l'utilisateur à partir des données spatiales et temporelles (DSP) et on détermine des phases de mobilité (Mob) comme étant l'ensemble des phases qui ne sont pas des phases statiques, et à chaque phase de mobilité (Mob) on détermine un trajet (traj) selon l'étape a), et de préférence, une phase statique étant identifiée par le fait que pendant une durée prédéterminée, les positions des antennes qui ont été connectées au téléphone sont situées dans un espace restreint autour d'une antenne prédéfinie parmi ces antennes, l'espace restreint étant de préférence déterminé par l'ensemble des antennes voisines de l'antenne prédéfinie à un ordre prédéfini,.

5. Procédé selon l'une des revendications précédentes, pour lequel à l'étape a), on forme le trajet (traj) depuis un point de départ à un instant de départ vers un point d'arrivée à un instant d'arrivée en passant de préférence par des points-étapes définis par des emplacements des couples emplacements-instants à des instants-étapes entre l'instant de départ et l'instant d'arrivée, les points de départ et d'arrivée correspondant aux emplacements des couples emplacements-positions, respectivement à l'instant de départ et à l'instant d'arrivée, l'instant de départ correspondant à l'instant de fin de la connexion de l'antenne au point de départ et l'instant d'arrivée correspondant à l'instant de début de la connexion de l'antenne au point d'arrivée.

6. Procédé selon la revendication 5, dans lequel on détermine successivement les points-étapes :

- en calculant la distance entre l'emplacement du point-étape précédent, le premier point-étape correspondant au point de départ, et à l'instant correspondant à cet emplacement et chaque position d'antenne des données spatiales et temporelles à laquelle le téléphone s'est connecté après l'instant du point-étape précédent, et
- en calculant l'accroissement de cette distance au cours du temps, le point-étape étant déterminé à la première position d'antenne au cours du temps pour laquelle l'accroissement de la distance est inférieur à un seuil prédéfini.

**7.** Procédé selon l'une des revendications précédentes, dans lequel, à l'étape b), on identifie (Det) les noeuds successifs (NIS) de la manière suivante :

i) on identifie le noeud de départ le plus proche possible de l'emplacement du couple emplacement-instant du premier instant du trajet ;
ii) puis pour chaque couple emplacement-instant suivant, on identifie le noeud le plus proche de l'emplacement de ce couple emplacement-instant qui soit relié par des portions de route au noeud identifié du couple emplacement-instant précédent et s'il n'y a pas de solution possible :

a1) on réitère l'étape ii) pour le couple emplacement-instant précédent pour identifier le noeud suivant le plus proche ;
a2) si l'étape a1) ne permet pas de trouver une solution, on revient à l'étape i) où on identifie le noeud suivant le plus proche l'emplacement du couple emplacement-instant du premier instant du trajet

**8.** Procédé selon l'une des revendications précédentes, dans lequel, à l'étape c), on détermine le nombre prédéterminé de chemins possibles (CP) par une optimisation au plus court chemin de manière séquentielle et en affectant un coefficient de pénalité à la vitesse des portions de route utilisées par les chemins possibles (CP) issue d'une optimisation au plus court chemin précédente.

**9.** Procédé selon l'une des revendications précédentes, dans lequel à l'étape d), on détermine (Corr) l'indice de corrélation (Ind) à partir de la composante de similarité spatiale $J_{spat}$ suivante :

$$J_{spat}(X, \widehat{X}) = \sum_{i=1}^{N_{sample}} \widetilde{d}(X(t_i), \widehat{X}, t_i)$$

$$\widetilde{d}(X(t_i), \widehat{X}, t_i) = \min_{t_j \leq t_i} d\left(X(t_i), \widehat{X}(t_j)\right)$$

Où $X(t_i)$) correspond aux emplacements des couples emplacements-instants à chaque instant ti et où $\widehat{X}(t_j)$ correspond aux noeuds de passage du chemin possible à chaque instant tj, la fonction d mesurant la distance entre $X(t_i)$) et $\widehat{X}(t_j)$ et $N_{sample}$ correspondant aux nombres de noeuds de passage.

**10.** Procédé selon l'une des revendications précédentes, dans lequel à l'étape d), on détermine (Corr) l'indice de corrélation (Ind) à partir de la composante de similarité de mouvement $J_{mouv}$ suivante :

$$J_{mouv}(x) = (\log(x + 1) - \log(2))^2 + \left(\log\left(\frac{1}{x} + 1\right) - \log(2)\right)^2$$

Où

$$x = F_{med}\left(\frac{d\widehat{t}}{dt}(X, \widehat{X})\right)$$

et

$$\hat{t}(t_i) = \arg\min_{t_j} d\left(X(t_i), \hat{X}(t_j)\right)$$

Où X($t_i$)) correspond aux emplacements des couples emplacements-instants à chaque instant ti et où $\hat{X}(t_j)$ correspond aux noeuds de passage du chemin possible à chaque instant tj, la fonction d mesurant la distance entre X($t_i$)) et $\hat{X}(t_j)$ et $F_{med}$ étant la fonction de filtre médian.

**11.** Procédé selon les revendications 9 et 10, dans lequel, l'indice de corrélation (Ind) est déterminé par la formule suivante :

$$J_{prox}(X,\hat{X}) = \lambda \cdot J_{spat}(X,\hat{X}) + (1-\lambda) \cdot J_{mouv}(X,\hat{X})$$

Où $\lambda$ est compris entre 0 et 1.

**12.** Procédé selon la revendication 11, dans lequel, à l'étape e), on détermine un score S par la formule suivante :

$$S = \frac{\tanh \hat{J} + 1}{2}$$

$$\text{Avec } \hat{J} = \frac{J_{prox} - \mathbb{E}(J_{prox})}{std(J_{prox})}$$

Où $\mathbb{E}(J_{prox})$ et std($J_{prox}$) sont respectivement l'espérance et l'écart-type de $J_{prox}$ et on détermine le mode de transport maximise le score S.

**13.** Procédé selon l'une des revendications précédentes, pour lequel on prétraite (Pre) les données spatiales et temporelles (DSP) acquises pour ne retenir que les données correspondant à celles du téléphone de l'utilisateur (DSP_t).

**14.** Produit programme d'ordinateur téléchargeable depuis un réseau de communication et/ou enregistré sur un support lisible par ordinateur et/ou exécutable par un processeur ou un serveur, comprenant des instructions de code de programme pour la mise en oeuvre du procédé selon l'une des revendications précédentes, lorsque ledit programme est exécuté sur un ordinateur ou un téléphone portable.

[Fig 1]

[Fig 2]

Tel          Res

↓            ↓

┌──────────────────┐
│       Acq        │
└──────────────────┘

↓ DSP

┌──────────────────┐
│       Pre        │
└──────────────────┘

↓ DSP_t

┌──────────────────┐
│       S/D        │
└──────────────────┘

↓ Mob

G_MDP                    ┌──────────────────┐
                         │       For        │
↓                        └──────────────────┘

┌──────────────────┐     traj
│      Det_SG      │
└──────────────────┘

SG ↓

┌──────────────────────────┐
│           Det            │
└──────────────────────────┘

↓ NIS

┌──────────────────┐
│       Opt        │
└──────────────────┘

↓ CP

┌──────────────────────────┐
│           Corr           │
└──────────────────────────┘

↓ Ind

┌──────────────────┐
│     Det-MDP      │
└──────────────────┘

↓

MDP

[Fig 3]

A_i

C(A_i,0)

C(A_i,1)

C(A_i,2)

[Fig 4]

B

A

C

[Fig 5]

$\times A_{j+4}, t_{j+4}$

$\times A_{j+5}, t_{j+5}$

$\times A_{j+3}, t_{j+3}$

$A_{j+2}, t_{j+2} \times$

$A_j, t_j \times$        $\times A_{j+1}, t_{j+1}$

$\otimes$
PE_i

[Fig 6]

a)                                          b)

n21                                        n21

P2                                         P2

P1                                         P1

n11                                        n11

n12                                        n12

lg                                          lg

[Fig 7]

[Fig 8]

D1

[Fig 9]

[Fig 10]

[Fig 11]

a)

b)

Europäisches
Patentamt

European
Patent Office

Office européen
des brevets

**RAPPORT DE RECHERCHE EUROPEENNE**

Numéro de la demande

**EP 22 21 1238**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FERESHTEH ASGARI ET AL: "CT-Mapper: Mapping sparse multimodal cellular trajectories using a multilayer transportation network", COMPUTER COMMUNICATIONS., 25 avril 2016 (2016-04-25), XP055297966, NL ISSN: 0140-3664, DOI: 10.1016/j.comcom.2016.04.014 * page 1 – page 23 *  ----- | 1-14 | INV. H04W4/029 G01C21/34 G06F16/29 G06Q10/02 |
|  |  |  | DOMAINES TECHNIQUES RECHERCHES (IPC) |
|  |  |  | H04W G06F G01C G06Q |

Le présent rapport a été établi pour toutes les revendications

| Lieu de la recherche | Date d'achèvement de la recherche | Examinateur |
|---|---|---|
| La Haye | 9 février 2023 | Mavridis, Theodoros |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

**EP 4 195 709 A1**

**Littérature non-brevet citée dans la description**

- **ASGARI.** *CT-Mapper : Mapping sparse multimodal cellular trajectories using a multilayer transportation network,* 27 Avril 2016

- **BONNETAIN.** *TRANSIT : Fine-grained human mobility trajectory inference at scale with mobile network signaling data,* Juillet 2021